# EUROPEAN PATENT SPECIFICATION

(11) **EP 2 762 416 B1**
(45) Date of publication and mention of the grant of the patent: **18.01.2017**
(21) Application number: 13191790.8
(22) Date of filing: 06.11.2013
(51) Int. Cl.: B65D 30/06, B32B 37/14, B31F 5/00, B65D 85/34, B31F 1/28

(54) **Packaging material especially for fruits and vegetables and a method for producing the packaging material**
Verpackungsmaterial insbesondere für Obst und Gemüse und ein Verfahren zur Herstellung des Verpackungsmaterials
Les matériaux d'emballage en particulier pour les fruits et légumes et un procédé de fabrication du matériau d'emballage

(30) Priority: 05.02.2013 PL 40268213
(43) Date of publication of application: 06.08.2014
(73) Proprietor: SILBO Sp. z o.o., 44-240 Zory (PL)
(72) Inventor: Spiewok, Marcin, 44-330 Jastrzebie Zdrój (PL)
(74) Representative: Trawinska, Urszula

(56) References cited:
- EP-A1- 2 070 831
- EP-A1- 2 441 698
- ES-A1- 2 204 272
- FR-A- 1 215 810
- FR-A- 1 565 635
- US-A- 5 823 683

## Description

The present invention relates to material designed for packaging of food products, especially fruits and vegetables. The present invention relates also to the method for producing packaging material, especially fruits and vegetables.

Fruits and vegetables designed for sale in large-area self-service shops are previously packaged and/or customized by the manufacturer and delivered to the shop in such a way. Most often it applies to vegetables such as onions and potatoes as well as fruits, e.g. apples. Such processing is convenient both for the shop and the customer, as the goods sold are already weighed and packaged. As packaging material the polyethylene or polypropylene foil is commonly used. Since food products transported and stored in such a manner require to be aired, very often the foil is combined with a mesh which not only ensures airing but also allows the buyer to see and touch the goods which are inside the package. The packaging/customizing operations are carried out by machines, most often at the manufacturer's plant. These packaging machines use the input packaging material in the form of continuous web of foil wound on reels; such foil, apart from all necessary information and images already printed on it, has strips or windows made of a mesh and joined to it. Such prepared foil is fed from the reel to the machine which welds or glues together the longitudinal edges of the foil to obtain a tubular body from which, in subsequent operations, the machine produces the individual modules in welding/gluing and cutting operations. Fruits or vegetables are packed in such formed individual modules of packaging material and are finally glued or heat sealed.

Various methods of joining of foil with a mesh are known, as well as various packaging products manufactured by employing such methods.

From European Patent Application EP2441698A1 a package is known which is produced from a continuous band and contains both continuous longitudinal bands made of polyethylene foil and continuous longitudinal bands made of polypropylene mesh. The adjacent bands of foil and mesh overlap each other and are joined together within this overlapping area using a narrow polyethylene strip placed onto a mesh and, by subsequent welding, joined with the PE foil band through openings in the mesh. This invention solves the problem of joining two different materials, namely polyethylene and polypropylene, which are not compatible and therefore may not be directly joined by welding or heat sealing.

A Spanish patent description ES2214142 discloses a solution in which the individual bands of material are joined by a strip made of polyethylene resin.

Another Spanish patent description ES2239920 discloses a solution in which the subsequent bands are joined using glue which melts under the influence of elevated temperature. According to another Spanish patent description ES2204271 (EP2070831) the openings are cut out in plastic sheets and, further, the elements made of mesh are welded into these openings.

French application FR1215810A concerns a material, according to the preamble of claim 1, constituting a combination of two materials, one of which may be paper coated with polyethylene or other plastic and the second a textile mesh or perforated cellulose, with bonding made by gluing or welding, by means of an additional foil band going through the openings in the mesh or perforation. This material is intended for covering trays.

Another French application FR1565635A concerns a material for covering trays or boxes, constituting a combination of two materials - a perforated and continuous material that may be of paper or cardboard and is connected in an S-shaped bond by gluing or welding.

All abovementioned inventions EP2441698A1, ES2214142, ES2239920, ES2204271 present the packaging material made exclusively from plastics. Since packing of fruits and vegetables into plastic packages using the heat sealing method causes depositing of plastic foil residues on the heaters, the latter requires frequent cleaning or must be previously protected by special coatings.

The purpose of this invention is to obtain a packaging material that can be used in packaging machines employing the heat-sealing method and resolves the problem of foil deposits' formation on the heaters. Further, such material should reduce the amount of plastics in packages, therefore contributing to natural environment protection.

The essence of the solution according to the invention is a packaging material in the form of a continuous band joined by welding with overlapping mesh elements, in which this continuous band is made of paper with at least one surface coated with polyolefin. the continuous band is directly bonded on its polyolefin coated side with the mesh elements by welding. The polyolefin coating allows joining the paper with the mesh by means of the welding technique.

In one embodiment of the invention the paper can be covered with polyolefin selectively, i.e. in a discontinuous way. In this embodiment the paper is coated with polyolefin only in the overlap area designed for joining with the mesh and in places where the packaging machine seals the package; the rest of paper surface remains uncoated. The polyolefin coating may also be applied on the paper in specific points.

In the preferred embodiment of the invention the packaging material consists of paper with the weight of 60 grams per square metre and coated with PE layer with the weight of 17 grams per square metre and it also consists of polyethylene mesh weighing 20 - 60 grams per square metre. In this preferred embodiment the paper bands are jointed interchangeably with the mesh bands.

In other preferred embodiment the mesh elements are welded into openings which are cut out in paper sheets.

The method of producing the packaging material in the form of a continuous band containing mesh elements consists in coating of at least one side of continuous paper band with polyolefin, then placing the mesh directly on the coated side of paper in such a manner that the part of it is superimposed on the paper and forms an overlap, and finally this part is subjected to welding at the temperature within the range of 180 - 300°C.

In the preferred embodiment of this method the continuous bands of paper are welded with continuous band of mesh interchangeably.

In another preferred embodiment the openings are cut out in a continuous band of paper and then the corresponding parts of mesh are placed onto these openings and welded to the paper along the overlaps.

Preferably, the overlap of paper and mesh is 2.5 cm wide and welding speed is 25 m/min.

In another preferred embodiment of the method according to the invention, at least one side of paper is coated with polyolefin in discontinuous way.

The advantage of the invention is that it significantly reduces the consumption of plastics in manufacture of packages. Moreover, since plastic is replaced with paper, the problem of foil deposits on heaters of packaging machines employing the welding method is solved.

Further, it unexpectedly turned out that use of polyolefin-coated paper allows increasing the welding temperature, speeding up of the production of packaging material according to the invention and improving the output of packaging machines. The speed of packaging material production increased from 25 m/min up to 40 m/min and the packaging speed of vegetables and fruits was improved from about 22 - 26 packages per minute up to 30 - 40 packages per minute, depending on the weight of the packaged products. Owing to very good heat insulation properties of paper it was possible to weld at the temperature of 300ºC. This temperature is more than two times higher than the polyethylene foil melting temperature (about 125ºC).

In accordance with an exemplary embodiment, the invention is presented on a set of drawings which represents the following:

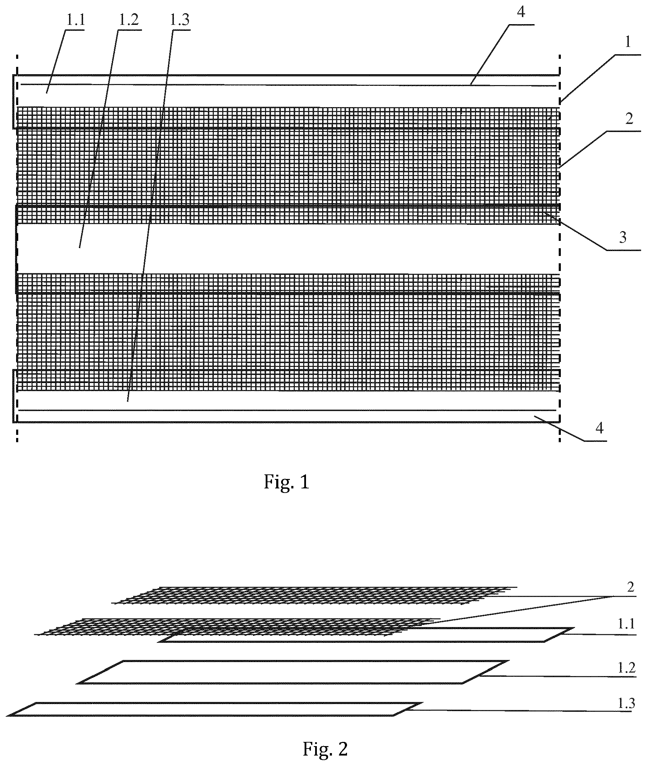

Fig. 1 shows a top view of a part of packaging material in the form of bands interweaved with mesh bands;
Fig. 2 shows in a perspective view how the bands of mesh are placed onto paper bands;

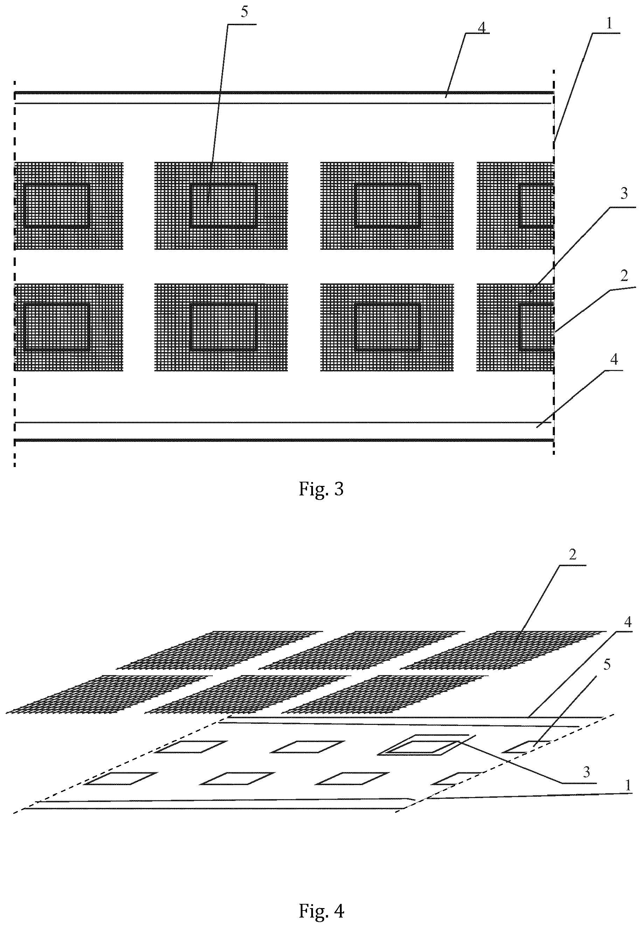

Fig. 3 shows a part of packaging material in the form of openings filled with mesh;
Fig. 4 shows in a perspective view how the mesh elements are placed on openings in paper band.

In the exemplary embodiment of the invention, the material designed for packaging of potatoes has the form of continuous band (1) wound on a reel and consisting of three bands of paper and two bands of mesh arranged interchangeably. Two outer paper bands (1.1, 1.3) are 10 cm wide, one inner band (1.2) is 16 cm wide, the weight of paper is 60 grams per square meter, and the paper is coated with thin layer of polyethylene with the weight of 17 grams per square metre. The inner bands overlap each other forming 2.5 cm wide overlaps (3) in such arrangement that the mesh (2) is placed on polyethylene-coated paper surface. In the overlap areas the bands are permanently joined with each other by welding.

In another embodiment, the material according to the invention has the form of continuous, 64-cm wide band (1) wound on a reel and made of paper with the weight and polyethylene coating same as in the exemplary embodiment described above and containing rectangular openings (5) with the dimensions of 8 x 12 cm. In these openings the rectangular mesh pieces (2) with the dimensions of 12 x 16 cm are located, which are placed on polyethylene-coated paper surface in such a way that they form a 2-cm wide overlaps (3) and are permanently joined with paper by welding. The openings are spaced every 295 mm.

In another embodiment of the invention the paper bands described in first embodiment are coated with polyethylene layer only in the areas of overlaps (3), i.e. in the areas of permanent bonding with mesh band and along the external edges where the overlap (4) 2.5 cm wide is formed. The other characteristics of this embodiment are same as in the first example.

The exemplary embodiment of the method of using the invention consists it that the continuous band of paper (1) with the weight of 60 grams per square metre and width of 64 cm is on one side coated with polyethylene to form a polyethylene layer with the weight of 17 grams per square metre, then this band is cut into two bands (1.1, 1.3) 10 cm wide each and one band (1.2) 16 cm wide. Further, the paper bands fed from a reel are joined in alternating way with two 19 cm wide bands (2) made of polyethylene mesh with the weight of 30 grams per square metre, which are also fed from a reel. The mesh bands are placed directly on coated surface of paper bands (1.1, 1.2, 1.3) in such way that they reach beyond the edges of paper bands and, therefore, form the overlap (3) with the width of 2.5 cm. Next the paper bands and mesh bands are welded together in the overlap areas at the temperature of 180°C. At this temperature the welding speed amounts to 25 metres per minute. Finally, the joined bands are re-wound on the reel.

In another embodiment, the paper and mesh as described in previous embodiment are welded at the temperature of 300°C, and welding speed is 40 metres per minute.

In another embodiment the method of using the invention is such that continuous band of paper (1) with weight of 60 grams per square metre and width of 64 cm is on one side coated with polyethylene to form a polyethylene layer with the weight of 17 grams per square metre, then in the band fed from a reel the openings (5) with the dimensions of 8 x 12 cm are cut out. Further, on these openings the rectangular pieces of polyethylene mesh (2) with dimensions of 12 x 16 cm and weight of 30 grams per square metre are placed from the coated side and welded at the temperature of 180°C. At this temperature the welding speed is 20 cycles per minute. Spacing of windows is 295 mm. Finally, the paper with mesh pieces is re-wound on a reel.

In the embodiment similar to the one described above, at welding temperature of 300°C the welding speed of 30 cycles per minute was reached.

The invention may be used for production of packaging materials, as well as in food processing industry and in the sector of logistics.

## Claims

1. Packaging material, having the form of a continuous band joined by means of the welding method with overlapping mesh elements, wherein said continuous band (1) is made of paper with at least one side coated with polyolefin, **characterised in that** the continuous band (1) is directly bonded on its polyolefin coated side with the mesh elements (2) by welding, where polyolefin is PE (polyethylene) and the mesh material is PE as well or polyolefin is PP (polypropylene) and the mesh material is PP as well.

2. The material according to claim 1, **characterised in that** it is coated with polyolefin selectively, i.e. the coating is discontinuous.

3. The material according to claim 1, **characterised in that** the paper band (1) is coated with polyolefin in the area of the overlap (3) resulted from overlapping the band and the mesh (2) and in the area of overlap (4) where the package is welded by packaging machine.

4. The material according to claim 2, **characterised in that** the continuous band (1) is coated with polyolefin in specific points.

5. The material according to any of claims 1 - 4, **characterised in that** the specific gravity of paper amounts to 60 grams per square, the weight of polyethylene coating is 17 grams per square metre, and polyethylene mesh has a the weight of 20 - 60 grams per square metre of its area.

6. The material according of any of claims 1 - 5, **characterised in that** continuous bands of paper (1) are joined with mesh bands (2) in such arrangement that these paper bands interchange with these mesh bands.

7. The material according to any of claims 1 - 6, **characterised in that** the mesh pieces (2) are welded into openings (5) cut out in paper sheets.

8. The method of producing the material designed for production of packaging and having the form of a continuous band containing the mesh elements, wherein continuous bands of paper (1) are coated with polyolefin on at least one side, said method **characterised in that** the mesh (2) is placed directly on the coated side of paper in such a way that a part of mesh overlaps the paper edge and forms the overlap (3), and then this part of mesh is subjected to welding at the temperature of 180 - 300°C., where as polyolefin PE (polyethylene) is used and the as mesh material is PE is used as well or as polyolefin PP (polypropylene) is used and the as mesh material PP is used as well.

9. The method according to claim 8, **characterised in that** the continuous bands of paper (1) are welded with continuous bands of mesh interchangeably.

10. The method according to claim 9, **characterised in that** in continuous band of paper (1) the openings (5) are cut out and then the pieces of mesh (2) corresponding to these openings are placed on them and welded in the area of overlaps (3).

11. The method according to claim 10, **characterised in that** the overlap (3) formed by paper band (1) and mesh (2) overlapping each other is 2.5 cm wide, and welding speed is 25 cycles per minute.

12. The method according to claim 6, **characterised in that** the paper band (1) is polyolefin-coated on at least one side selectively.

## Patentansprüche

1. Verpackungsmaterial, das eine Form eines kontinuierlichen Bandes aufweist, das während eines Schweißverfahrens mit überlappenden Maschenelementen verbunden wird, wobei dieses kontinuierliche Band (1) aus Papier mit einer mindestens auf einer Seite aufgebrachten Polyolefinschicht hergestellt wird, **dadurch gekennzeichnet, dass** das kontinuierliche Band (1) seitens der Polyolefinschicht mit den Maschenelementen (2) direkt verschweißt wird, wobei sowohl die Polyolefinschicht aus PE (Polyethylen), als auch das Maschenmaterial aus PE oder sowohl die Polyolefinschicht aus PP (Polypropylen), als auch das Maschenmaterial aus PP hergestellt wird.

2. Material nach Anspruch 1, **dadurch gekennzeichnet, dass** es ist mit Polyolefin selektiv beschichtet, d.h. die Beschichtung wird nicht vollflächig überzogen.

3. Material nach Anspruch 1, **dadurch gekennzeichnet, dass** das Papierband (1) mit Polyolefin im Bereich der Überlappung (3) beschichtet ist, die durch sich miteinander überlappenden Band und Maschen (2) gebildet wird, und in dem Bereich der Überlappung (4), wo die Verpackung mit einer Verpackungsmaschine verschweißt wird.

4. Material nach Anspruch 2, **dadurch gekennzeichnet, dass** das kontinuierliche Band (1) mit Polyolefin punktuell beschichtet wird.

5. Material nach einem der Ansprüche 1 bis 4, **dadurch gekennzeichnet, dass**
in diesem Bereich das spezifische Papiergewicht 60 g/m² beträgt,
das Gewicht der Polyethylenbeschichtung 17 g/m² beträgt
und das Gewicht der Polyethylenmaschen 20 - 60 g/m² beträgt.

6. Material nach einem der Ansprüche 1 bis 5, **dadurch gekennzeichnet, dass**
die kontinuierliche Papierbänder (1) mit Maschenbändern (2)
so verbinden sind, dass sich diese Papierbänder mit
Maschenbändern miteinander abwechseln.

7. Material nach einem der Ansprüche 1 bis 6, **dadurch gekennzeichnet, dass**
die Maschenelemente (2) in die Ausschnitte (5) in den Papierblättern eingeschweißt werden.

8. Verfahren zur Herstellung des Materials, das zur Herstellung
der Verpackung vorgesehen wird, das eine Form eines kontinuierlichen Bandes mit
Maschenelementen aufweist, wobei die kontinuierliche
Papierbänder (1) mit einer mindestens auf einer Seite aufgebrachten Polyolefinschicht überzogen sind,
**dadurch gekennzeichnet, dass**
die Maschen (2) auf der beschichteten Papierseite direkt auf solche Weise angebracht werden,
dass ein Maschenteil die Papierkante überlappt und eine
Überlappung (3) bildet, und danach dieser Maschenteil wird bei der Temperaturen 180 - 300 °C verschweißt, wobei die Polyolefin aus PE (Polyethylen) und das Maschenmaterial aus PE hergestellt werden
oder die Polyolefin aus PP (Polypropylen) und das Maschenmaterial
aus PP hergestellt werden.

9. Verfahren nach Anspruch 8, **dadurch gekennzeichnet, dass** die kontinuierlichen Papierbänder (1) mit kontinuierlichen Maschenbändern
abwechselnd verschweißt werden.

10. Verfahren nach Anspruch 9, **dadurch gekennzeichnet, dass**
in dem kontinuierlichen Papierband (1) die Ausschnitte (5) gemacht werden und
dann die Maschenelemente (2) entsprechend in diese Ausschnitte angebracht und dann in dem Bereich der Überlappung (3) verschweißt werden.

11. Verfahren nach Anspruch 10, **dadurch gekennzeichnet, dass**
die Überlappung (3), die durch das Papierband (1) und das Maschenband (2) gebildet wird, eine Breite 2,5 cm aufweist, und die Geschwindigkeit des Schweißverfahren 25 Zyklen per
Minute beträgt.

12. Verfahren nach Anspruch 6, **dadurch gekennzeichnet, dass**
das Papierband (1) mit einer mindestens auf einer Seite aufgebrachten Polyolefinschicht selektiv überzogen ist.

## Revendications

1. Matériau d'emballage, ayant la forme d'une bande continue jointe au moyen du procédé de soudage avec des éléments de maillage qui se chevauchent, où ladite bande continue (1) est réalisée en papier avec au moins un côté revêtu de polyoléfine, **caractérisé en ce que** la bande continue (1) est directement liée sur le côté revêtu de polyoléfine avec les éléments de maillage (2) par soudage, où polyoléfine est PE (polyéthylène) et le matériau de maillage est aussi PE ou polyoléfine est PP (polypropylène) et le matériau de maillage est aussi PP.

2. Le matériau selon la revendication 1, **caractérisé en ce qu'**il est sélectivement revêtu de polyoléfine, c'est à dire le revêtement est discontinu.

3. Le matériau selon la revendication 1, **caractérisé en ce que** la bande de papier (1) est revêtue de polyoléfine dans la région du chevauchement (3) qui résulte de la bande et du maillage (2) qui se chevauchent et dans la région de chevauchement (4) où le paquet est soudé par la machine d'emballage.

4. Le matériau selon la revendication 2, **caractérisé en ce que** la bande continue (1) est revêtue de polyoléfine dans des points spécifiques.

5. Le matériau selon l'une quelconque des revendications 1 - 4, **caractérisé en ce que** la gravité spécifique de papier s'élève à 60 grammes par mètre carré, le poids du revêtement en polyéthylène est 17 grammes par mètre carré, et le maillage en polyéthylène a le poids de 20 - 60 grammes par mètre carré de sa surface.

6. Le matériau selon l'une quelconque des revendications 1 - 5, **caractérisé en ce que** bandes de papier continues (1) sont jointes par des bandes de maillage (2) dans un tel arrangement que ces bandes de papier alternent avec ces bandes de maillage.

7. Le matériau selon l'une quelconque des revendications 1 - 6, **caractérisé en ce que** les pièces de maillage (2) sont soudées dans des ouvertures (5) découpées dans des feuilles de papier.

8. La méthode de fabrication du matériau destiné à la fabrication d'emballages et ayant la forme d'une bande continue comportant les éléments de maillage, où les bandes de papier continues (1) sont revêtues de polyoléfine sur au moins un côté, ladite méthode étant **caractérisée en ce que** le maillage (2) est placé directement sur le côté revêtu du papier de telle manière qu'une partie du maillage chevauche le bord du papier et forme le chevauchement (3), et ensuite cette partie du maillage est soumis au soudage à la température de 180 - 300°C, où comme polyoléfine, PE (polyéthylène) est utilisé, et comme matériau de maillage, PE est utilisé aussi bien ou comme polyoléfine, PP (polypropylène) est utilisé et comme matériau de maillage, PP est utilisé aussi bien.

9. La méthode selon la revendication 8, **caractérisée en ce que** bandes de papier continues (1) sont soudées avec des bandes de maillage continues de manière interchangeable.

10. La méthode selon la revendication 9, **caractérisée en ce que** dans la bande de papier continue (1), les ouvertures (5) sont découpées et ensuite les pièces du maillage (2) correspondant à ces ouvertures sont placées sur elles et soudées dans la région du chevauchement (3).

11. La méthode selon la revendication 10, **caractérisée en ce que** le chevauchement (3) formé par la bande de papier (1) et le maillage (2) chevauchant l'un l'autre a une largeur de 2,5 cm, la vitesse de soudage est 25 cycles par minute.

12. La méthode selon la revendication 6, **caractérisée en ce que** la bande de papier (1) est revêtue de polyoléfine sur au moins un côté de manière sélective.
